# EUROPEAN PATENT APPLICATION

(11) **EP 4 524 709 A1**
(43) Date of publication of application: **19.03.2025**
(21) Application number: 23198068.1
(22) Date of filing: 18.09.2023
(51) Int. Cl.: G06F 3/04845, G06F 30/12, G06F 30/17, G06F 30/27, G06F 111/20, G06F 111/16, G06F 113/12

(54) **COMPUTER-IMPLEMENTED METHOD OF GENERATING IMAGES FOR PRODUCT DESIGN**

(71) Applicant: Cre[ai]tion GmbH, 60314 Frankfurt am Main (DE)
(72) Inventor: Dorndorf, Nik, 60314 Frankfurt am Main (DE); Limm, Marco, 60314 Frankfurt am Main (DE); Schütz, Marc, 60314 Frankfurt am Main (DE)
(74) Representative: Mzb PartmbB

(57) **Abstract**

The disclosed method and apparatus offer a mostly visual approach through an intuitive graphical user interface, e. g. presented in a web browser, that can be implemented with latent diffusion models. It presents a seemingly endless feed of images to the user that are pre-generated as variations from existing images with a fine-tuned model, also ensuring technical requirements by prompt engineering. The users select images from the feed to work on in boards, especially by successively generating new images (12) that resemble a first image (10) and a second image (11). The resemblance can be steered with a control element (9) (cf. Fig. 5 and Fig. 6). The resulting paths of modifications can be modified and re-used and consistently track and visualize the design process. Collaboration of many users is possible as well as the tailoring to preferences, such as corporate identities.

## Description

### Technical Field

The invention relates to the process and products as per the prior art portion of the independent claims.

### Background Art

In the realm of image generation via generative Artificial Intelligence, prior models, notably Generative Adversarial Networks (GANs), have dominated the discourse. However, Latent Diffusion models have recently emerged utilizing an innovative diffusion process to transmute noise signals into refined images (cf. NPL2, NPL3, NPL4). The relevant state of the art is well described in YANG, Ling et al. "Diffusion Models: A Comprehensive Survey of Methods and Applications" (NPL5), especially chapters "7.4.1 Text-to-Image Generation" and "7.2.1 Image Super Resolution, Inpainting, Restoration, Translation, and Editing".

### Summary of invention

### Technical Problem

In current image generation methods, users are required to find text prompts that lead to an image that meets their expectation. This is a major obstacle for visually oriented users, a talent that is otherwise very helpful for professional designers.

Moreover, state-of-the-art tools offer only a very limited number of images for the user to choose from for further work.

Additionally, the most widely used design tools do not offer a method to consistently track and visualize the design process starting from the first draft to the last one.

### Solution to Problem

The problem is solved by a method and apparatus as recited in the claims section that offer a mostly visual approach through an intuitive graphical user interface for interaction with images as elaborated in the description of embodiments.

### Advantageous effect of invention

The presented methods reduce the effort of creating design images, reducing workload and time-to-market. They allow to generate more precise and diverse outputs than previous methods in an intuitive visual workflow. They overcome limitations of existing approaches such as number of choices and number of collaborating users.

### Brief description of drawings

Fig. 1 shows a feed (7) of images serving as starting points, one of them being selected as the first image (10) for further work.
Fig. 2 shows a board (8) serving as an area for work-in-progress, initially only containing the first image (10) previously selected from the feed (8).
Fig. 3 depicts that a control element (9) that appears at an edge of an image on a board. E. g. by clicking on it, the user starts a modification.
Fig. 4 illustrates that the user then selects a second image (11), in this case from the feed (7).
Fig. 5 shows how the user can choose the similarity more towards the first image (10) or towards the second image (11).
Fig. 6 shows that a new image (12) resembling both the first and the second image (10, 11) is generated and shown between them in the board (8).
Fig. 7 visualizes a layered set of preferences that can be achieved with the disclosed method.

### Description of embodiments

A typical embodiment presents a seemingly endless feed (7) of images in a user interface that are pre-generated, e. g. every night, using methods like Stable Diffusion XL (PODELL, Dustin, et al. "SDXL: Improving Latent Diffusion Models for High-Resolution Image Synthesis", NPL2). On one hand generating variations from a pool of pre-existing images with a fine-tuned model, on the other hand ensuring a given set of technical requirements by proper prompt engineering, such as a certain pattern, material, point of view, or background.

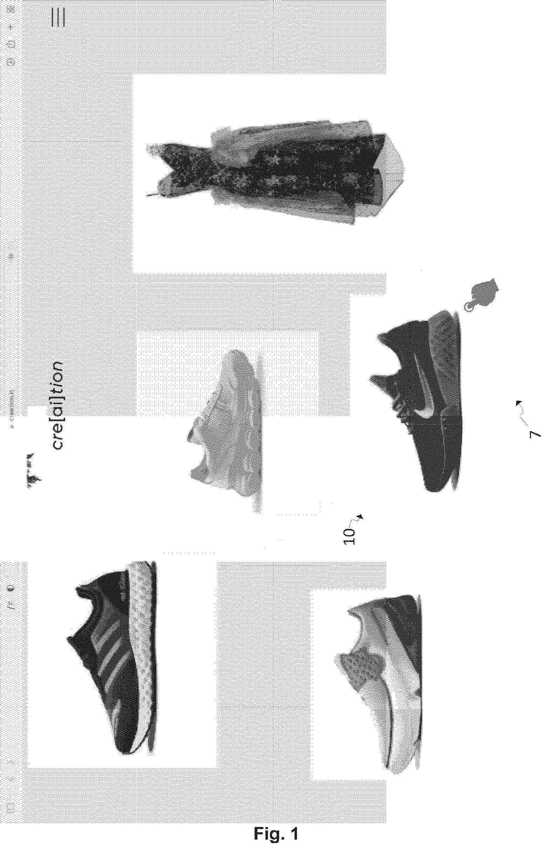

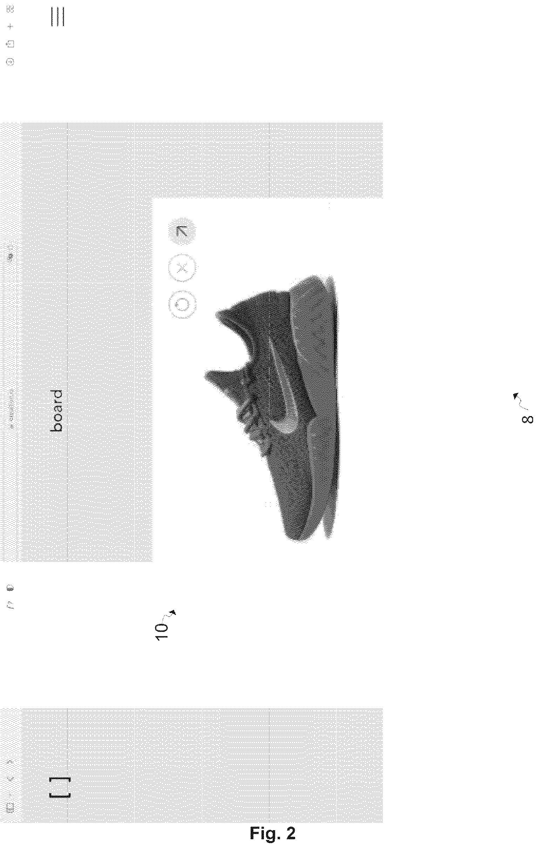

A user selects one of the images in the feed (7) as a starting point for the successive modifications, as shown for an exemplary first image (10) in Fig. 1. This causes creation of a board (8) that is presented in the user interface serving as an area for work-in-progress. In its initial state, it only contains the first image (10) that the user has selected from the feed (7), as shown in Fig. 2.

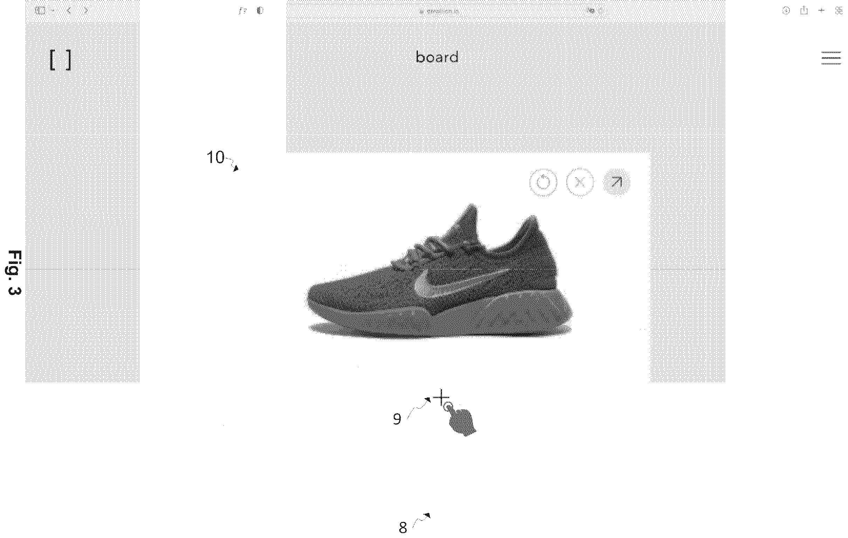

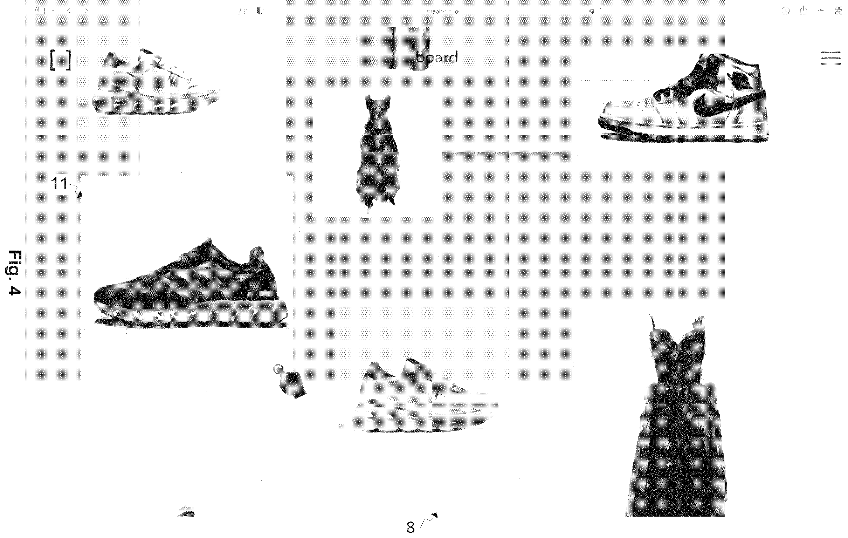

Among other user interface elements, a control element (9) appears at an edge of an image on a board and, e. g. by clicking on it, the user starts a modification. Fig. 3 depicts this for the first image (10), the same can later be done for any image on the board (8). The user can then select a second image (11) from the feed (7) or a board (8) or external sources. Fig. 4 shows the case where this selection is done from the feed (7).

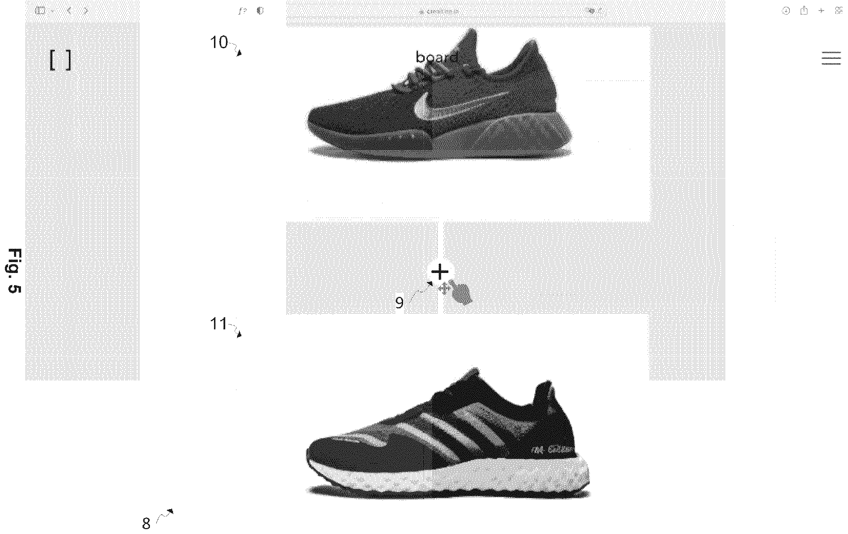

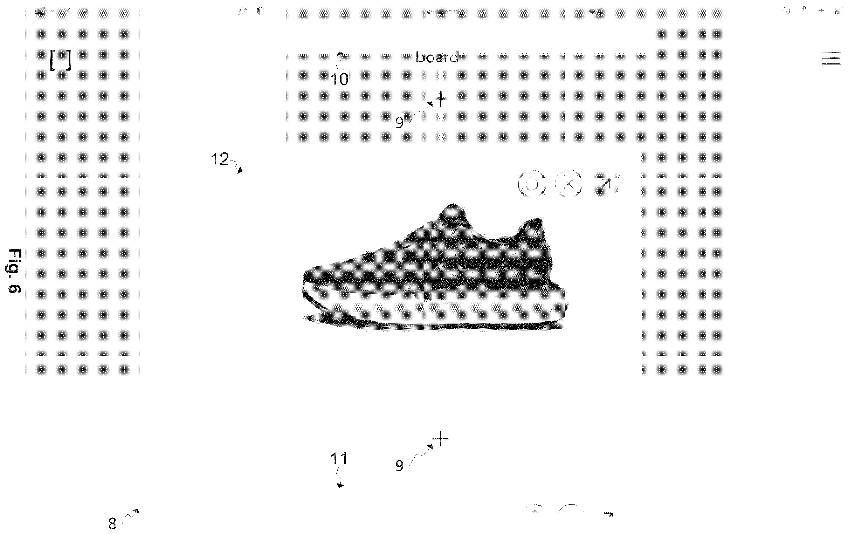

With the second image (11) now being presented in the board (8), a control element (9) is shown between the first and the second image (10, 11). The user can interact with the control element (9), dragging it towards the starting image (10) or towards the second image (11) as depicted in Fig. 5. This triggers generation of a new image (12) which resembles first image (10) and the second image (11), with more similarity to the first image (10) when the control element (9) is nearer to it after dragging. The new image (12) then appears as a result between the first and the second image (10, 11) as illustrated in Fig. 6, along with an intuitive animation that visualizes the insertion and the ongoing generation. The generation is achieved by translating the relative position of the control element to a corresponding set of vectors in the latent space.

Colours, patterns, materials, shapes, complexity, product type, or other design ingredients can also be represented by images or separately as selectable options and used to set directions in this process.

Similarly, a user can trigger generation of a new image resembling the first image (10) without specifying a certain direction in form of a second image, corresponding to a random vector in latent space.

The user adds as many images as necessary by either moving the control element between images on the board or away from any image, which causes yet another image to be generated and selected to define the direction of further changes.

This forms paths of successive images on the boards, which are visualized in the user interface e. g. by lines between the images. The user can modify the paths later with standard user interface mechanisms like menus or buttons, e. g. by deleting images.

Any of the images can be stored by a user as a result or deleted to concentrate on the most important ones, employing normal user interface mechanisms like menus or buttons.

The modification vectors along such a path can be re-used in many ways, e. g.: The first image (10) on a board can be replaced by the user with a different one and the same modifications will be regenerated along all paths. Or the modifications as well as the images from external sources can be included in the feed, either globally upon its next generation or locally in its presentation to the corresponding user.

Users can go back to specific points in the design process along the paths, which enables them to review how each image was derived.

If necessary, the users can filter the feed for predefined topics or perform searches, both based on similarity to chosen image or based on text descriptions. Contrastive Language-Image Pre-Training (CLIP) is used to recommend search result for both cases: The cosine similarity of either the embedding of the chosen image or of the search text to other images can serve as criteria for the recommended images.

Instead of a full image, a user can also select only portions of a first image which is implemented with methods such as Segment-Anything Model (SAM, cf. NPL6). As requested by the user, the generation makes modifications only inside (inpainting), or outside (outpainting) of these portions, or use only these portions as new image (cropping).

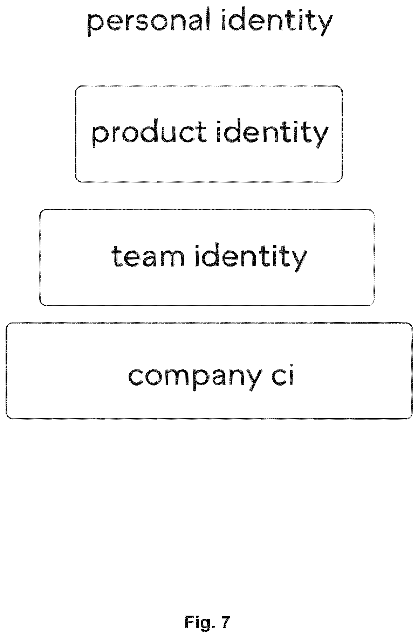

Many boards can be created and on each of the boards many users can collaborate with the described methods. Recommender systems are used to adapt the images presented in the feed to each user. Through interaction with images, for example adding them to boards, the recommender system adapts to the preferences of each user. These preferences can be collected for individuals, but also combined, for example, for teams and companies. Such preferences of companies, teams and individuals can be combined in a layered fashion to achieve a distinguished design approach as depicted in Fig. 7.

The models used to generate images for the feed are trained according to data from a stakeholder. This stakeholder can, for example, be a company that provides images and metadata of their past designs. In this fashion, a corporate identity can be learned by the model. The feed will then include images from the model that was trained on the company's data and generate images similar to the company's previous designs.

The user has the option to create different categories and save images to those different categories. The images of a category can later be viewed together.

### Industrial applicability

The invention is applicable, inter alia, throughout many industry branches, like fashion and automotive, both as an internal tool and as an offer for their customers or independent designers.

### Reference signs list

- 7: Feed of images
- 8: Board of images
- 9: Control element
- 10: First image selected from feed
- 11: Second image, e. g. selected from feed
- 12: Generated new image

### Citation list

### Non-patent literature

NPL2: PODELL, Dustin, et al. "SDXL: Improving Latent Diffusion Models for High-Resolution Image Synthesis"; July 2023.
   https://arxiv.org/pdf/2307.01952.pdf
NPL3: ROMBACH, Robin, et al. "High-Resolution Image Synthesis with Latent Diffusion Models"; July 2022.
   https://arxiv.org/pdf/2112.10752.pdf
NPL4: HO, Jonathan et al. "Denoising Diffusion Probabilistic Models"; December 2020.
   https://arxiv.org/pdf/2006.11239.pdf
NPL5: YANG, Ling et al. "Diffusion Models: A Comprehensive Survey of Methods and Applications"; March 2023.
   https://arxiv.org/pdf/2209.00796.pdf
NPL6: Meta Al, "Segment Anything Model".
   https://segment-anything.com/

## Claims

1. Computer-implemented method of creating images, preferably
photorealistic images for the design of technical products, comprising,
a feed (7) of many images representing many possible starting points in a graphical user interface such as a web browser,
at least one board (8) containing images representing the work in progress in the graphical user interface, and
interactive control elements (9) appearing in the graphical user interface on each side of images on the board (8) and on lines between images on the board (8)
**characterized in**
generating the images in the feed (7), for example using text-to-image generation with a latent diffusion model, with variations from pre-existing images or text prompts from external sources,
presenting the feed (7) to each user in the graphical user interface,
filling the boards (8) initially with a user-selected first image (10) from the feed (7),
generating new images (12) on each board (8) one-by-one from a selected first image (10) on that board and a second image (11) from one of the boards (8) or from the feed (7) or from external sources in response to input from one of a plurality of users, e.g. moving control elements (9) with a computer mouse,
storing user-selected images as results of the method.

2. Method of the previous claim, wherein
the position of the control element (9) after its movement is translated to the distance in latent space between the first image (10) and the second image (11) for the generation of the new image (12), the distance to the first image (10) being smaller when the control element (9) is nearer to the first image (10) and the distance to the second image (11) being smaller when the control element is nearer to the second image (11).

3. Method of any of the previous claims, wherein
on request by one of the users, the first image (10) on a board is replaced by another image from one of the boards (8) or from the feed (7) or from external sources, and
all new images (11) on that board are regenerated, preferably with the same distances in latent space as before.

4. Method of any of the previous claims, wherein
the images in the feed (7) are generated by fine tuning the model training and prompt engineering to ensure specific technical properties, such as the same relative point of view or a white background.

5. Method of any of the previous claims, wherein
on request by the user who is viewing the feed (7), the feed presentation is filtered for one of many topics.

6. Method of any of the previous claims, wherein
on request by the user, such as by entering a text in a search bar,
images are recommended for selection, e. g. by using Contrastive Language-Image Pre-training to find images based on cosine similarity of their embedding to the entered text.

7. Method of any of the previous claims, wherein
on request by the user, such as by choosing a first image (10) from the feed (7), similar images are recommended for selection, e. g. by using Contrastive Language-Image Pre-training to find such images based on cosine similarity of their embedding to the embedding of the first image (10).

8. Method of any of the previous claims, wherein
on request by the user, such as by selecting a specific segment in the first image (10),
only graphics either inside or outside of this segment are changed during generation of the new image (12).

9. Method of any of the previous claims, wherein
the preferences of each of the users are learned through their interactions with images on boards (8) and similar modifications are used when generating images in the feed (7) or when presenting images in the feed (7) to the respective user.

10. Method of any of the previous claims, wherein
the preferences of each of the users are learned through their interactions with images on boards (8) and the automatic application of similar modifications is offered to the respective user when working on other images in a board (8).

11. Method of any of the previous claims, wherein
the images loaded from external sources or from the feed (7) by each of the users are stored and
included when generating images in the feed (7) or when presenting the feed (7) to the respective user.

12. Method of any of the previous claims, wherein
the model used to generate images for the feed (7) is trained according to requests of stakeholders, such as the corporate identity or new product categories of business customers.

13. Data processing apparatus comprising means for carrying out the
method of any of the preceding claims.

14. Computer program comprising instructions which, when the program
is executed by a computer, cause the computer to carry out the method of any of the preceding method claims.

15. Data carrier signal carrying the program of the previous claim.
